# EUROPÄISCHE PATENTANMELDUNG

(11) **EP 4 683 110 A1**
(43) Veröffentlichungstag der Anmeldung: **21.01.2026**
(21) Anmeldenummer: 25185715.7
(22) Anmeldetag: 26.06.2025
(51) Int. Cl.: H01Q 1/32, H01Q 21/00, G01S 7/02, G01S 7/03, G01S 13/931

(54) **PRODUKTIONSVERFAHREN FÜR EIN RADARSYSTEM ZUR UMGEBUNGSERFASSUNG MIT EINER WELLENLEITERANTENNE GEBILDET AUS MEHREREN FORMTEILEN**

(30) Priorität: 15.07.2024 DE 102024206647
(71) Anmelder: AUMOVIO Autonomous Mobility Germany GmbH, 85057 Ingolstadt (DE)
(72) Erfinder: Dr. Wintermantel, Markus, 88131 Lindau (DE)
(74) Vertreter: Aumovio Corporation

(57) **Zusammenfassung**

Verfahren zur Produktion eines Radarsystems zur Umgebungserfassung, wobei das Radarsystem eine Platine, welche mindestens ein Hochfrequenzbauteil trägt, und mehrere Formteile, welche an ihrer Oberseite jeweils eine oder mehrere Einzelantennen zum Senden und/oder Empfangen von Radarsignalen aufweisen, beinhaltet, dadurch gekennzeichnet, dass die Formteile über eine Schablone in definierter Position relativ zueinander und/oder zur Platine ausgerichtet werden und in dieser Position mit der Platine verbunden werden, insbesondere durch Lötung, durch gegebenenfalls leitfähige Verklebung und/oder durch Verstemmung.

## Beschreibung

Die Erfindung bezieht sich auf ein Radarsystem zur Umgebungserfassung für Kraftfahrzeuganwendungen. Das Radarsystem besitzt eine Wellenleiterantenne, welche aus mehreren Formteilen gebildet wird. Bei der Produktion des Radarsystems werden sie während ihrer Verbindung mit einer Platine erfindungsgemäß mit einer Schablone zueinander ausgerichtet.

### Stand der Technik

Kraftfahrzeuge werden zunehmend mit Fahrerassistenzsystemen ausgerüstet, welche mit Hilfe von Sensorsystemen die Umgebung erfassen und aus der so erkannten Verkehrssituation automatische Reaktionen des Fahrzeugs ableiten und/oder den Fahrer instruieren, insbesondere warnen. Dabei wird zwischen Komfort- und Sicherheitsfunktionen unterschieden.

Als Komfortfunktion spielt in der momentanen Entwicklung FSRA (Full Speed Range Adaptive Cruise Control) eine wichtige Rolle. Das Fahrzeug regelt dabei die Eigengeschwindigkeit auf die vom Fahrer vorgegebene Wunschgeschwindigkeit ein, sofern die Verkehrssituation dies zulässt, andernfalls wird die Eigengeschwindigkeit automatisch an die Verkehrssituation angepasst.

Sicherheitsfunktionen gibt es mittlerweile in vielfältiger Ausprägung. Eine Gruppe bilden dabei Funktionen zur Reduzierung des Brems- bzw. Anhalteweges in Notsituationen bis hin zur autonomen Notbremsung. Eine weitere Gruppe sind Spurwechselfunktionen: Sie warnen den Fahrer bzw. greifen in die Lenkung ein, wenn der Fahrer einen gefährlichen Spurwechsel durchführen möchte, also wenn sich ein Fahrzeug auf der Nebenspur entweder im toten Winkel befindet (wird als BSD - "Blind Spot Detection" - bezeichnet) oder sich schnell von hinten nähert (LCA - "Lane Change Assist").

Mittlerweile wird der Fahrer aber nicht mehr nur assistiert, sondern die Aufgabe des Fahrers wird zunehmend autonom vom Fahrzeug erledigt, d. h. der Fahrer wird zunehmend ersetzt; dabei wird von autonomem Fahren gesprochen.

Für Systeme der oben beschriebenen Art werden Radarsensoren eingesetzt, häufig auch in Fusion mit Sensoren anderer Technologie, wie z.B. Kamerasensoren. Radarsensoren haben u. a. den Vorteil, dass sie auch bei schlechten Wetterbedingungen zuverlässig arbeiten und neben dem Abstand von Objekten auch direkt deren radiale Relativgeschwindigkeit über den Dopplereffekt messen können. Als Sendefrequenzen werden dabei in der Regel 77GHz und 79GHz eingesetzt.

Durch den zunehmenden funktionalen Umfang solcher Systeme erhöhen sich permanent die Anforderungen, insbesondere an die Detektionsreichweite und das Auflösungsvermögen in Azimut und Elevation - deshalb werden deutlich größere Antennen notwendig; Radarsysteme mit hohem Auflösungsvermögen werden häufig als bildgebende Radare oder Imaging-Radare bezeichnet.

Die Antenne ist ein zentrales Element jedes Radarsensors; sie definiert maßgeblich die Performance und den Preis des Sensors. Aktuell werden die Antennen meist noch in Planartechnologie auf der Hochfrequenz-Platine realisiert, z. B. als Patchantennen. Nachteilig an einer solchen Antennenrealisierung sind einerseits die Verluste in Zuleitungen und Antennen selber (was die Reichweite limitiert) und andererseits die hohen Kosten für eine solche Platine (insbesondere weil spezielle hochfrequenzfähige Substrate benötigt werden, die teuer sind und eine aufwändige Prozessierung benötigen).

Aus DE 10 2018 203 106 A1 ist ein grundsätzlicher Aufbau eines gattungsgemäßen Radarsensors bekannt, welcher die Nachteile der Planartechnologie dadurch überwindet, dass eine Wellenleiterantenne aus Kunststoff und ein Hochfrequenzbauteil mit mindestens einem Element zum direkten Abstrahlen bzw. Empfangen eingesetzt werden, wobei sich Wellenleiterantenne und Hochfrequenzbauteil auf entgegengesetzten Seiten des Platine befinden und die Kopplung zwischen Hochfrequenzbauteil und Wellenleiterantenne durch die Platine hindurch erfolgt, z. B. über ein einfaches Loch in der Platine. In DE 10 2020 211 254 A1 wird beschrieben, wie die Antenne kostengünstig durch ein einzelnes einlagiges Formteil, welches mit der Platine insbesondere durch Lötung verbunden ist, realisiert werden kann.

### Aufgabe, Lösung und Vorteile der Erfindung

Aufgabe der Erfindung ist es, abweichend vom Stand der Technik die robuste Herstellung einer kostengünstigen Antenne für Imaging-Radare vorzuschlagen.

Diese Aufgabe wird grundsätzlich durch ein Produktionsverfahren gemäß Anspruch 1 gelöst. Zweckmäßige Ausgestaltungen der Erfindung sind in den Unteransprüchen beansprucht.

Die Vorteile der Erfindung ergeben sich aus der Tatsache, dass eine große Antenne für Imaging-Radare auf kostengünstige und robuste Weise realisiert und hergestellt werden kann.

Das erfindungsgemäße Verfahren zur Produktion eines Radarsystems zur Umgebungserfassung, welches eine Platine mit mindestens einem Hochfrequenzbauteil sowie mehrere Formteile, welche an ihrer Oberseite jeweils eine oder mehrere Einzelantennen zum Senden und/oder Empfangen von Radarsignalen aufweisen, beinhaltet, ist dadurch gekennzeichnet, dass die Formteile über eine Schablone in definierter Position relativ zueinander und/oder zur Platine ausgerichtet werden und in dieser Position mit der Platine verbunden werden, insbesondere durch Lötung, durch gegebenenfalls leitfähige Verklebung und/oder durch Verstemmung.

Ein Radarsystem, bei welchem die Übertragung der Radarsignale zwischen dem mindestens einen Hochfrequenzbauteil und der jeweils mindestens einen Einzelantenne auf der Oberseite der Formteile zumindest teilweise durch innenliegende Wellenleiter realisiert wird, kann ferner dadurch gekennzeichnet sein, dass hohlförmige Wellenleiter jeweils durch eine Vertiefung in der der Platine zugewandten Seite des Formteils und einer metallisierten Oberfläche der Platine gebildet werden, wobei durch diesen Aufbau die Formteile jeweils aus einem einlagigen zumindest partiell metallisierten Kunststoffteil oder einem einlagigen Metallteil, welches vorzugsweise durch Druckguss, Tiefziehen oder Biegetechnik hergestellt ist, bestehen können oder bestehen.

Zweckmäßigerweise wird eine grobe Positionierung (bzw. Vorfixierung oder Vorpositionierung) der Formteile zur Platine durch Strukturen, insbesondere Zapfen und/oder Stifte, realisiert, welche vom Formteil in Aussparungen oder Löcher der Platine ragen.

In einer vorteilhaften Ausgestaltung der Erfindung kann die Schablone federnde Elemente aufweisen, welche die einzelnen Formteile während einer Lötung oder Verklebung mit der Platine gegen diese drücken, um insbesondere bei Unebenheiten in der Platine und/oder den Formteilen eine durchgehende Löt- bzw. Klebeverbindung neben den durch Platine und Formteile gebildeten Wellenleitern zu gewährleisten.

Zweckmäßigerweise kann ein Formteil Sollbiegestellen aufweisen, insbesondere in Form von Nuten, Durchbrüchen und/oder Stegen.

Vorteilhafterweise kann die Positionierung der Formteile zur Schablone durch Strukturen, insbesondere Zapfen und/oder Stifte, realisiert werden, welche von der Schablone in Aussparungen oder Löcher der Formteile ragen.

Ferner können die Positionierungsstrukturen der Schablone eine selbstzentrierende Eigenschaft haben, insbesondere durch konische Form und/oder federnde Eigenschaft.

Zweckmäßigerweise weist die Schablone axial geführte federnde Stifte bzw. Schablonenfederstifte auf, die zur Positionierung der Formteile und/oder zur Anpressung der Formteile gegen die Platine dienen.

Vorteilhafterweise kann die Positionierung der Schablone zur Platine durch Strukturen, insbesondere Zapfen und/oder Stifte, realisiert werden, welche von der Schablone in oder durch Aussparungen oder Löcher der Platine ragen.

Zweckmäßigerweise weist die Schablone Strukturen mit einem beweglichen Mechanismus auf, welche nach Auslösen bzw. Anwenden von diesem Mechanismus die Platine von hinten gegen Referenzflächen auf der Schablone drücken, um während des Verbindungsprozesses zwischen Formteilen und Platine die Schablone mit der Platine zu fixieren und/oder die Platine in eine möglichst ebene Lage zu bringen, wobei es vorzugsweise Pressstrukturen über die ganze Platine verteilt gibt, also auch im mittleren Bereich, um insbesondere ein Durchbiegung der Platine durch Andrücken der Formteile von oben her zu vermeiden, und diese Pressstrukturen gegebenenfalls auch als Positionierungsstrukturen wirken.

Ferner kann eine Schablone mehrere Platinen abdecken, insbesondere alle sich auf einem Panel befindenden Platinen.

Auch kann es mehrere Hochfrequenzbauteile geben, die über ein gemeinsames Hochfrequenzsignal, das sogenannte LO-Signal, verbunden sind, wobei das LO-Signal vorteilhafterweise zumindest teilweise in wenigstens einem hohlförmigen Wellenleiter geführt wird, wozu es wenigstens ein weiteres mit der Platine verbundenes Formteil gibt und der hohlförmige Wellenleiter durch eine Vertiefung, Ausnehmung oder Ausbuchtung in der der Platine zugewandten Seite des Formteils und einer metallisierte Oberfläche der Platine gebildet wird, wobei dieses weitere wenigstens eine Formteil ebenfalls von der Schablonenvorrichtung für die Produktion fixiert und/oder positioniert wird.

Wenn sich das wenigstens eine Formteil für den hohlförmigen LO-Wellenleiter auf der anderen Platinenseite als die Formteile mit den Antennen befindet, weist die Schablonenvorrichtung vorzugsweise wenigstens eine Struktur mit einem beweglichen Mechanismus auf, welche nach Auslösen bzw. Anwenden von diesem Mechanismus das Formteil für den hohlförmigen LO-Wellenleiter oder die Formteile mit den Antennen von hinten gegen die Platine drückt.

### Kurzbeschreibung der Zeichnungen

Fig. 1 zeigt einen Aufbau eines Radarsensors nach Stand der Technik mit einem aufgelöteten einlagigen Formteil zur Bildung einer Antenne mit innenliegenden Wellenleitern und ein Hochfrequenzbauteil, das direkt über Löcher in der Platine mit diesen Wellenleitern verbunden ist.
Fig. 2 zeigt eine Platine mit vier einlagigen Formteilen zur Bildung einer großen Antenne für ein bildgebendes Radar.
In Fig. 3 ist eine Schablone dargestellt, die zur Ausrichtung und Fixierung der vier Formteile während ihrer Lötung auf die Platine dient.
Fig. 4 zeigt die Rückseite der Platine mit vier Hochfrequenzchips, welche über eine verzweigte LO-Leitung miteinander verbunden sind.
Fig. 5 zeigt ein auf die Platine aufgelötetes Formteil, dessen innenseitige Vertiefung zusammen mit der dort metallisierten Oberfläche einen innenliegenden LO-Wellenleiter realisiert.

### Ausführungsbeispiele

Bisher wurden Antennen für Radarsysteme zur Umfelderfassung meist als planare Antennen auf einer Hochfrequenzplatine realisiert. Dabei benötigen die Antennen und ihre Verbindungsleitungen mit dem speisenden bzw. empfangenden Hochfrequenzbauteil auf der Oberlage der Hochfrequenzplatine ein spezielles Substrat mit für Hochfrequenz geeigneten Materialdaten (z. B. definierte Dicke, definierte Dielektrizitätskonstante, sehr geringer Verlustwinkel). Insbesondere die Materialkosten dieses speziellen Substrats und seine Prozessierung (auch wegen der erforderlichen hohen Strukturgenauigkeiten) führen auf um Faktoren erhöhte Kosten gegenüber einer reinen Niederfrequenzplatine gleicher Größe und gleicher Lagenanzahl. Neben den Kosten sind aber auch die Signalverluste in den Antennen und ihren Zuleitungen nachteilig. Für eine Sende- und eine Empfangsantenne inkl. Zuleitungen liegen die Leistungsverluste zusammen typischerweise bei etwa 6dB. Eine derartig reduzierte Sensorempfindlichkeit resultiert in einer um 30% reduzierten maximalen Sensorreichweite.

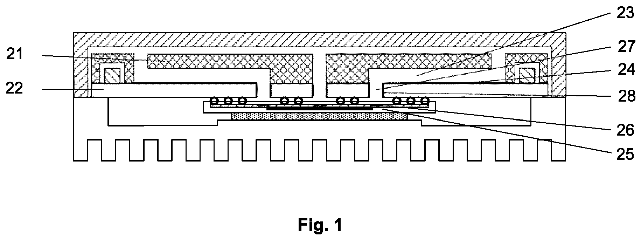

Aufgrund der genannten Nachteile von platinenbasierten Antennen werden nun verstärkt sogenannte Wellenleiterantennen betrachtet. Hier werden Antennen und ihre Zuleitungen mit Hilfe von Hohlleitern realisiert, welche im einfachsten Fall rechteckförmige Hohlräume mit metallischen bzw. metallisierten Wänden darstellen; deshalb wird häufig auch die Bezeichnung Hohlleiterantenne verwendet. Eine solche Antenne kann als Kunststoffteil mit metallisierten Oberflächen ausgeführt sein. In DE 10 2018 203 106 A1 ist ein Aufbau mit einer aus mehreren Lagen bestehenden Kunststoffantenne beschrieben, wobei Zuleitungen zu den Antennen durch innenliegende Hohlleiter realisiert sind, welche durch schlitzförmige Vertiefungen in zusammengefügten Lagen entstehen. Alternativ zeigt DE 10 2020 211 254 A1 eine in Fig. 1 dargestellte Realisierung einer Antenne durch einen einlagiges Formteil 21 aus Kunststoff, welches auf die Platine 22 aufgelötet ist, wobei drei Wände der für die Zuleitungen benötigten Hohlleiter 23 durch schlitzförmige Vertiefungen in der Unterseite des Formteils und die vierte Wand durch eine metallisierte Oberfläche 24 der Platine gebildet werden. In beiden Aufbauten befindet sich der Hochfrequenzchip 25 auf der Rückseite der Platine (also der zur Antenne gegenüberliegenden Seite) und weist an seiner Unterseite abstrahlende bzw. empfangende Elemente 26 auf, welche durch ein Loch 27 in der Platine mit metallisierten Seitenwänden 28 mit den Hohlleitern 23 in der Kunststoffantenne bzw. zwischen dieser und der Platine verbunden sind. Da bei diesen Aufbauten keine Leitungen mit Hochfrequenzsignalen innerhalb der Platine verlaufen, kann eine kostengünstige Niederfrequenzplatine benutzt werden. Weiterer Vorteil ist, dass die Hochfrequenzsignale komplett in Hohlleitern laufen, welche nur sehr geringe Leistungsverluste generieren, so dass sich eine hohe Sensorempfindlichkeit erzielen lässt.

Insbesondere für teil- oder vollautomatisiertes Fahren werden Radarsensoren benötigt, welche sowohl in Azimut, als auch in Elevation eine hohe Winkelgenauigkeit und -trennfähigkeit haben - sie werden als bildgebenden Radare bzw. Imaging-Radare bezeichnet. Für eine hohe Winkeltrennfähigkeit wird eine große Antennenapertur benötigt - nötige Breite und Höhe der Antennen liegen dabei im Bereich von 10-20cm oder sogar noch höher. Die Herstellung solcher großen Antennen ist mit Toleranzproblemen insbesondere hinsichtlich der Ebenheit verbunden; auch ist eine ausreichende Ebenheit von großen Platinen schwierig zu realisieren. Dazu kommt bei einem Aufbau mit einem einlagigen aufgelöteten Formteil noch das Problem, dass durch unterschiedliche thermische Ausdehnungskoeffizienten und durch unterschiedliche thermische Ausdehnung während des Abkühlprozesses nach dem Lötvorgang sehr hohe Spannungen zwischen Formteil und Platine entstehen können, welche insb. Über Lebensdauer zu Rissen in einem Formteil aus Kunststoff führen können oder zu lokaler Ablösung (weil sich beispielsweise Metallisierung von Formteil oder Platine ablöst).

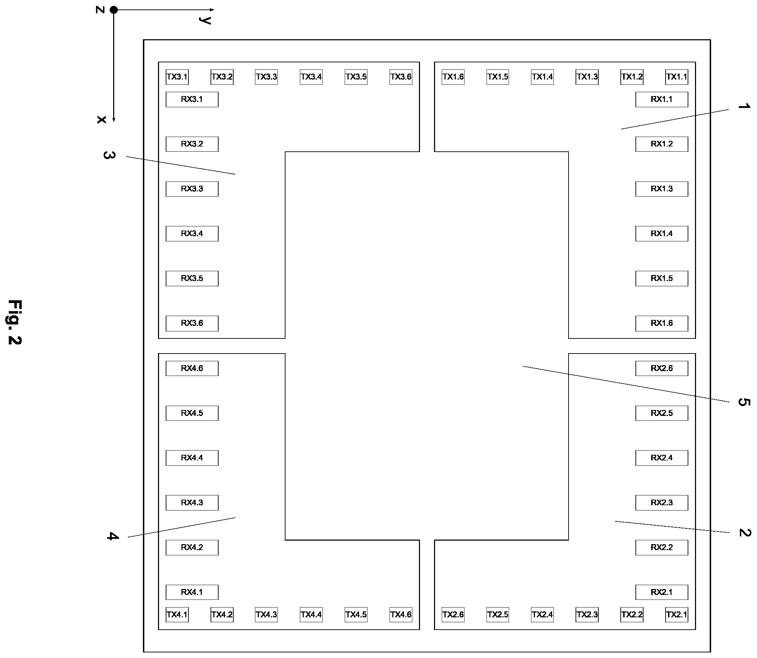

Zur Umgehung dieser Probleme können statt einem großen Formteil mehrere kleinere Formteile benutzt werden, welche auf die Platine aufgelötet werden. In Fig. 2 ist ein Beispiel mit vier Formteilen 1-4 dargestellt (Ansicht von oben). Jedes Formteil trägt sechs Sendeantennen (TX1.1-6, TX2.1-6, TX3.1-6, TX4.1-6) und sechs Empfangsantennen (RX1.1-6, RX2.1-6, RX3.1-6, RX4.1-6), deren Struktur nicht im Detail dargestellt ist. Vor dem Löten auf die Platine 5 werden sie über kleine Stifte auf ihrer Rückseite, welche in Löcher der Platine ragen, positioniert. Diese kleinen Stifte, auch Pins genannt, müssen einen signifikant geringeren Durchmesser haben als die Löcher der Platine, um gegen Toleranzen robust zu sein; auftretende Toleranzen sind insbesondere Positionsungenauigkeiten der durch Bohren hergestellten Löcher in der Platine, Durchmesserungenauigkeiten der Löcher (beispielweise weil sich Bohrer abnutzt) sowie Positionsungenauigkeiten und Durchmesserungenauigkeiten der Pins (durch begrenzte Genauigkeit des Werkzeuges zur Herstellung des Formteils). Durch dieses Spiel der Pins in den Platinenlöchern kommt es zu Positionsfehlern der Formteile in x- und y-Richtung (durch lateralen Versatz der Formteile und Verdrehung). Darüber hinaus gibt es noch weitere toleranzbedingte Ursachen für relative Positionsfehler der Formteile zueinander, so dass die reale Anordnung der RX-Antennen von der nominal äquidistanten und gleichartigen Anordnung in zwei parallelen horizontalen Reihen und die reale Anordnung der TX-Antennen von der nominal äquidistanten und gleichartigen Anordnung in zwei parallelen vertikalen Spalten abweichen kann - z. B. kann die Lücke zwischen den Antennen RX1.6 und RX2.6 größer sein als das nominale Raster, welche die anderen RX-Antennen aufweisen.

Solche Positionsfehler der Einzelantennen führen zu Phasenfehler in ihren Empfangssignalen, was zu Fehlern in der Winkelschätzung und zu reduzierter bzw. fehlerhafter Winkeltrennfähigkeit führt. Die Phasenfehler sind proportional zu sin(α), wobei α der Winkel relativ zur Senkrechten auf der Antenne darstellt und eine Antennenkalibrierung auf den Winkel α = 0 angenommen ist. Am wichtigsten ist eine hohe Winkelgenauigkeit und -trennfähigkeit im Bereich um 0° herum (also beispielsweise im Bereich -10° bis +10°); in diesem Bereich ändert sich die Sinusfunktion stark (ihre Ableitung cos(α) hat dort maximalen Wert), so dass recht große Phasenfehler auftreten können. Verglichen zu einer Unebenheit der Antennenanordnung (also die Oberflächen der Einzelantennen liegen nicht genau in einer Ebene insbesondere durch unebene Formteile und/oder eine unebene Platine, was zu Positionsfehlern in der zur Antenne senkrechten z-Richtung führt), sind die Positionsfehler in x- und y-Richtung viel kritischer, da sich Fehler in z-Richtung proportional zu 1-cos(α) auswirken und damit um α = 0 näherungsweise 0 sind (da Ableitung von cos(α) bei α = 0 verschwindet, also 0 ist).

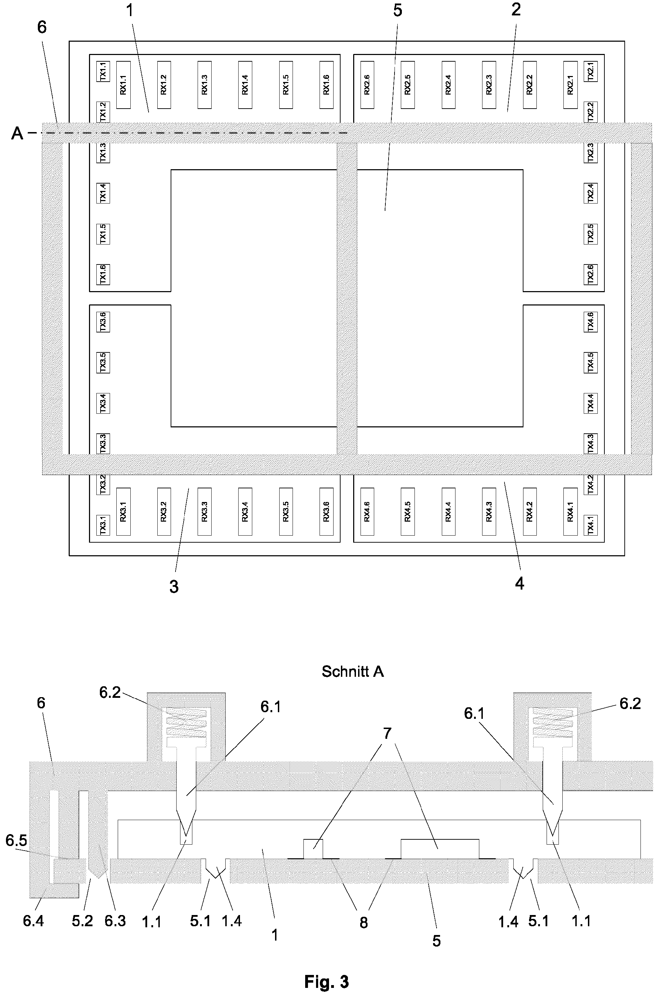

Um solche Positionsfehler in x- und y-Richtung zu vermeiden, sind die Formteile vor bzw. bei der Verlötung mit der Platine in die nominale Position zu bringen. Dazu kann eine Schablone verwendet werden, was in Fig. 3 dargestellt ist; im oberen Bild ist die Anordnung aus Formteilen 1-4, Platine 5 und Schablone 6 von oben gesehen dargestellt, das untere Bild zeigt einen Schnitt durch einen Teil dieser Anordnung (entlang Schnittlinie A). Die Schablone 6 weist Stifte 6.1 auf, welche in runde Löcher 1.1 der Formteile 1-4 greifen. Die Stifte 6.1 haben an ihrer Vorderseite eine konische Form, was eine inhärente Zentrierung mit den Löchern 1.1 der Formteile 1-4 realisiert (auch die Löcher können oben eine Fase haben, was in Fig. 3 nicht dargestellt ist). Des Weiteren sind die Stifte 6.1 in axialer Richtung beweglich und werden jeweils mit einer Feder 6.2 gegen das Formteil 1 gedrückt, wodurch auch bei Unebenheiten der Formteile 1-4 und/oder der Platine 5 eine Zentrierung der Löcher 1.1 zu den Stiften 6.1 gewährleistet ist. Außerdem hilft die Federkraft, eine durchgehende Lötung an den Seiten der innenliegenden Wellenleiter 7, also an den Verbindungen zwischen Formteil 1-4 und Platine 5 neben den Wellenleitern (Verbindungen sind mit 8 gekennzeichnet) zu gewährleisten:
- zum einen dadurch, dass an Stellen mit wenig Abstand zwischen Formteil und Platine (z. B. weil dort Platine lokal ein Aufwölbung nach oben hat) das Formteil in die Lotschicht gedrückt wird (und damit das Lot zur Seite), wodurch an Stellen mit größerem Abstand zwischen Formteil und Platine die Dicke der Lotpaste gegebenenfalls in Verbindung mit dem adhäsiven Verhalten der Lots ausreicht, um die Lücke zwischen Formteil und Platine zu schließen;
- und zum anderen durch Verbiegung des Formteils zur Platine hin über die Federkraft, wobei dazu das Formteil vorzugsweise Sollbiegestellen aufweist, insbesondere in Form von Nuten, Durchbrüchen und/oder Stegen.

Fig. 3 zeigt im Schnittbild auch Stifte 1.4 an der Unterseite der Formteile, die in größere Löcher 5.1 der Platine 5 ragen, was zur groben Positionierung bzw. Vorpositionierung der Formteile dient.

Die Schablone 6 ist relativ zur Platine 5 über Stifte 6.3, die in Löcher 5.2 der Platine 5 ragen, positioniert. Des Weiteren kann es vorteilhaft sein, dass die Schablone 6 nicht nur aufgelegt wird, sondern mit der Platine 5 fest fixiert wird. Dazu gibt es Halter 6.4, die von hinten die Platine 5 gegen Referenzflächen 6.5 auf der Schablone drücken; nicht explizit ist in Fig. 3 gezeigt, dass die Halter 6.4 zum Andrücken eine federnde/elastische oder klemmende Eigenschaft haben und es einen Mechanismus gibt, durch welchen nach Auflegen der Schablone 6 auf die Platine 5 die von hinten auf die Platine 5 drückenden Teile der Halter 6.4 dorthin geführt werden. Über die Referenzflächen 6.5 an der Schablone 6, gegen welche die Platine 5 von hinten gedrückt wird, kann ein ebener Verlauf der Antenne während des Lötvorgangs erreicht werden; da die Platine 5 groß ist (wegen der hohen Größe des hier betrachteten Imaging-Radars) und auch wegen der von den Schablonenfederstiften 6.1 auf die Formteile 1-4 und somit auf die Platine 5 ausgeübten Kraft (welche die Platine durchbiegen kann), ist vorteilhafterweise wenigstens ein Halter im mittleren Bereich der Platine vorzusehen. Grundsätzlich können die Halter 6.4 und die Stifte 6.3 zur Fixierung bzw. Positionierung von Schablone und Platine in einem gemeinsamen Element realisiert werden, auch kann dieses Element die Referenzflächen 6.5 beinhalten.

Der Lötprozess findet mit aufgebrachter Schablone statt. Zu berücksichtigen ist, dass es durch die hohen Temperaturen beim Lötprozesses zu thermischer Ausdehnung sowohl von Formteilen und Platine, also auch der Schablone kommt. Deshalb ist es zweckmäßig, dass für die Schablone ein Material (insb. Ein Metall bzw. eine Legierung) gewählt wird, welche einen ähnlichen thermischen Ausdehnungskoeffizienten hat wie Formteile und PCB (die ihrerseits ähnlichen Ausdehnungskoeffizienten etwa im Bereich 13-15ppm/K haben). Da sich beim Abkühlprozess Schablone und Platine plus aufgelötete Formteile unterschiedlich schnell abkühlen können, was zu hohen Spannungen führen könnte, kann es vorteilhaft sein, die Schablone abzunehmen, sobald das Lot so weit erstarrt ist, dass es zu keiner Verschiebung der Formteile mehr kommen kann.

Im Bestück- und Lötprozess sind üblicherweise noch mehrere Platinen in einem größeren Panel zusammenhängend verbunden (z. B. 4 Platinen). Dann kann es eine gemeinsame Schablone über mehrere bzw. alle Platinen des Panels geben.

Bedingt durch Toleranzen im Spritzgusswerkzeug zur Herstellung der Kunststoffformteile 1-4 kann die Lage ihrer Positionierungslöcher 1.1 zu den einzelnen TX- und RX-Antennen vom nominalen Wert abweichen. Solche Fehler können mit Hilfe der Lage der Positionierungsstifte bzw. Schablonenfederstifte 6.1 der Schablone 6 korrigiert werden.

Neben Spritzgießen kommt für die Herstellung von Kunststoffformteilen auch zunehmend der 3D-Druck in Betracht.

Als Verbindungstechnik zwischen Formteilen und Platine wurde bisher Löten betrachtet. Denkbar sind auch andere Verbindungstechniken wir Kleben (insbesondere mit leitfähigem Kleber) oder Verstemmen - bei einem Formteil aus Kunststoff bietet sich ein Heißverstemmen an. Das Verstemmen kann insbesondere dann von Interesse sein, wenn die innenliegenden Wellenleiter (zwischen Formteil und Platine) keine leitfähige und geschlossene Verbindung an ihren rechten und linken Seitenwänden benötigen, weil sich dort sogenannte Bandgap-Strukturen (also z. B. Reihen mit kleinen metallisierten Kunststoffpfosten) befinden.

Statt den bisher betrachteten Formteilen aus Kunststoff mit metallisierter Oberfläche können diese auch direkt als Metallteil realisiert sein, welches vorzugsweise durch Druckguss, Tiefziehen oder Biegetechnik hergestellt ist.

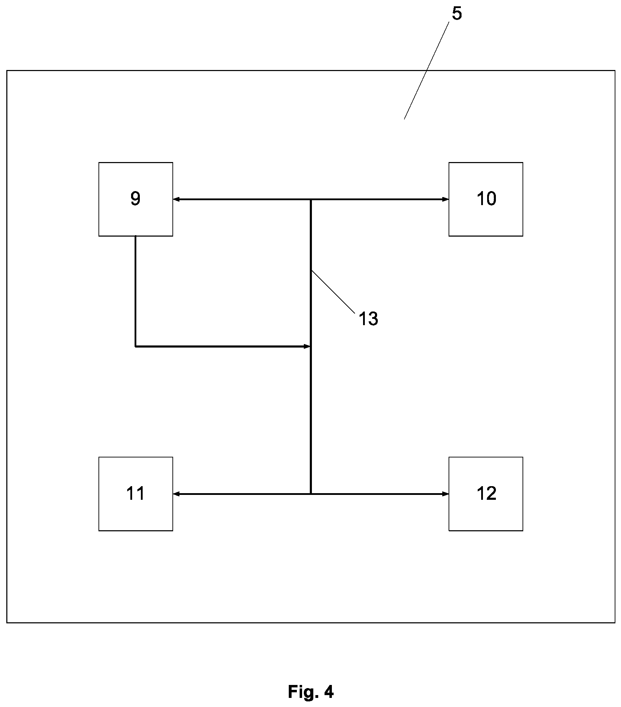

Bedingt durch die hohe Anzahl von TX- und RX-Antennen bei Imaging-Radaren werden üblicherweise mehrere Hochfrequenzbauteile verwendet; beim bisher betrachteten Beispiel von 24 TX- und 24 RX-Antennen beispielsweise vier Hochfrequenzchips für jeweils sechs TX- und sechs RX-Antennen - Fig. 4 zeigt die Rückseite der Platine 5 mit den Hochfrequenzchips 9-12. Nur einer die Chips (hier Chip 9) ist zuständig für die eigentliche Generierung des Hochfrequenzsignals, welches an die anderen drei Chips 10-12, aber auch zurück an den generierenden Chip 9 über die Leitungen 13 verteilt wird (Rückspeisung an generierenden Chip, so dass alle vier Chips das gemeinsame Hochfrequenzsignal mit gleicher Laufzeitverzögerung sehen). Das gemeinsame Hochfrequenzsignal wir üblicherweise als LO-Signal bezeichnet - häufig liegt es nicht bei der für die abgestrahlten/empfangenen Radarwellen benutzten Frequenz von etwa 77GHz, sondern bei einem Faktor 2-4 darunter. Die LO-Leitungen 13 sind recht lang, dürfen aber keine zu hohen Verluste aufweisen (sonst ist die in die Chips gespeiste LO-Leistung zu gering); deshalb benötigt die Realisierung der LO-Leitungen direkt auf der PCB (insbesondere als sogenannte Microstrip-Leitungen) ein verlustarmes spezielles Substrat, was wegen seines recht hohen Preises durch den oben vorgestellten Aufbau ja aber gerade vermieden werden soll.

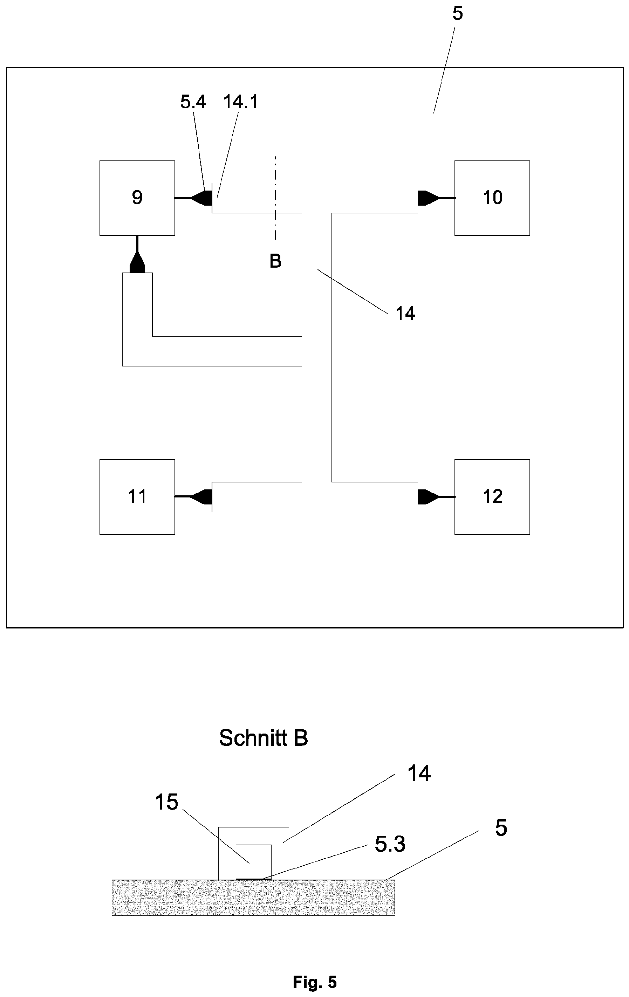

Deshalb sollen hier ebenfalls hohlförmige Wellenleiter eingesetzt werden. Fig. 5 zeigt oben die Platine 5 von hinten mit den vier Chips 9-12 sowie einem Formteil 14 aus oberflächenmetallisiertem Kunststoff; in Fig. 5 unten ist ein Schnitt im Bereich dieses Formteils dargestellt (entlang Schnittlinie B). Der hohlförmige Wellenleiter 15 wird durch eine längslaufende rechteckförmige Ausnehmung im Formteil 14, welche drei Seitenwände realisiert, und eine metallisierte Oberfläche 5.3 der Platine 5, welche die vierte Seitenwand bildet, generiert. Das Formteil ist dabei neben dem gebildeten Hohlleiter auf die Platine gelötet.

Die LO-Signale werden über elektrische Anschlüsse, insbesondere sogenannte Balls, vom Chip zur Platine geführt (in Fig. 5 nicht explizit gezeigt) und von dort gegebenenfalls nach einer kurze Microstrip-Leitung in einem im Platinensubstrat (FR4) gebildeten Wellenleiter 5.4 geleitet, welcher sich auch unter der aufgelöteten Seitenwand 14.1 des Formteils erstreckt; danach wird das LO-Signal aus dem im Platinensubstrat gebildeten Wellenleiter 5.4 in den Wellenleiter 15 eingekoppelt, welcher aus der Ausnehmung im Formteil und der metallisierten Platinenoberfläche gebildet ist. Damit sind die LO-Wellenleiter komplett geschlossen und können nicht abstrahlen, was insbesondere dann wichtig, wenn der LO bei einer geteilten Radarfrequenz arbeitet, da dort die von der internationalen Frequenzzulassung erlaubte Abstrahlung äußerst gering ist.

Wenn während des Lötprozesses die Anordnung von Platine und Formteilen für Antennen und die LO-Wellenleiter so ist, dass sich das Formteil für LO-Wellenleiter unten befindet, kann es nötig sein, dass es während des Lötprozesses von hinten gegen die Platine gedrückt wird; dazu kann es weitere Schablonenhalter analog zu den Haltern 6.4 in Fig. 3 geben, welche nun nicht von hinten gegen die Platine drücken, sondern gegen das Formteil für die LO-Wellenleiter.

Die Positionierung des Formteils für die LO-Wellenleiter zur Platine kann durch Strukturen, insbesondere Zapfen und/oder Stifte, realisiert werden, die vom Formteil in oder durch Aussparungen oder Löcher der Platine ragen. Wenn sich das Formteil während des Lötprozesses auf der Unterseite der Platine befindet, können diese Strukturen auch zur Vorfixierung des Formteils dienen, z. B. in Form von Clipsen, die ein gewisses Spiel haben, um ein Eindrücken des Formteils in die Lotpaste zu erlauben (über die von hinten wirkende Kraft der Schablonenhalter).

Bisher wurde betrachtet, dass sich das Formteil zur Bildung der LO-Wellenleiter auf der selben Seite wie die Hochfrequenzchips befindet - sie können allerdings auch auf gegenüberliegenden Seiten liegen. Zur Speisung des Wellenleiters kann dann eine elektrische Leitung von einem Ball des Chips aus durch die Platine hindurch zu einem in den Wellenleiter auskoppelnden Element geführt werden. Oder alternativ können sich auf der Unterseite des Chips strahlende Elemente befinden, welche das LO-Signal direkt durch für Radarwellen durchlässige Stellen in der Platine in die Wellenleiter einstrahlen bzw. aus diesen empfangen. Die für Radarwellen durchlässigen Stellen in der Platine können durch Löcher mit metallisierten Seitenwänden realisiert sein oder dadurch, dass sich dort auf und zwischen Trägermaterialschichten der Platine keine Metallisierung befindet und die Stellen mit Durchkontaktierungen umrandet sind.

Bisher wurde angenommen, dass das Formteil für die LO-Wellenleiter aus oberflächenmetallisiertem Kunststoff besteht. Es kann aber auch direkt als Metallteil realisiert sein, welches vorzugsweise durch Druckguss, Tiefziehen oder Biegetechnik hergestellt ist. Generell ist es vorteilhaft, wenn das für das Formteil benutzte Material einen ähnlichen Temperaturausdehnungskoeffizienten wie die Platine aufweist, um nach dem Lötprozess auftretende Spannungen zu vermeiden bzw. zu reduzieren. Denkbar ist auch ein zweiteiliges Formteil, welches aus einem auf die Platine gelöteten Rahmen und einem Deckel besteht, wie es häufig zur Schirmung benutzt wird.

Als Verbindungstechnik zwischen LO-Wellenleiter-Formteil und Platine wurde bisher Löten betrachtet. Denkbar sind auch andere Verbindungstechniken wir Kleben (insbesondere mit leitfähigem Kleber) oder Verstemmen - bei einem Formteil aus Kunststoff bietet sich ein Heißverstemmen an. Das Verstemmen kann insbesondere dann von Interesse sein, wenn die innenliegenden Wellenleiter (zwischen Formteil und Platine) keine leitfähige und geschlossene Verbindung an ihren rechten und linken Seitenwänden benötigen, weil sich dort sogenannte Bandgap-Strukturen (also z. B. Reihen mit kleinen metallisierten Kunststoffpfosten) befinden.

Bisher wurde der Querschnitt des hohlförmigen LO-Wellenleiters als rechteckförmig angenommen. Wenn das LO-Signal gegenüber der für die abgestrahlten/empfangenen Radarwellen benutzten Frequenz (im Bereich von 77GHz) heruntergeteilt ist, dann wird der Querschnitt eines rechteckförmigen Wellenleiters recht groß; eine Reduzierung des Querschnitts lässt sich durch einen oder mehrere längslaufende Stege realisieren (wird auch als "ridged waveguides" bezeichnet).

Abschließend sei noch Folgendes bemerkt:
Bei einem Radarsystem wird sowohl gesendet als auch empfangen. Vereinfachend wird in der obigen Beschreibung häufig nicht beides explizit ausgeführt bzw. unterschieden. Z. B. wird bei der Antenne oder den Elementen auf dem Chip von "(Ab)strahlen" gesprochen - bei Empfangsantennen bedeutet das natürlich "Empfangen"; und wenn bei einem Wellenleiter von "Einspeisen" gesprochen wird, dann bedeutet das für einen Wellenleiter, der seinerseits eine andere Komponente speist, ein "Auskoppeln".

## Patentansprüche

1. Verfahren zur Produktion eines Radarsystems zur Umgebungserfassung, wobei das Radarsystem eine Platine (5), welche mindestens ein Hochfrequenzbauteil trägt, und mehrere Formteile (1, 2, 3, 4), welche an ihrer Oberseite jeweils eine oder mehrere Einzelantennen zum Senden und/oder Empfangen von Radarsignalen aufweisen, beinhaltet, **dadurch gekennzeichnet, dass** die Formteile (1, 2, 3, 4) über eine Schablone (6) in definierter Position relativ zueinander und/oder zur Platine (5) ausgerichtet werden und in dieser Position mit der Platine (5) verbunden werden, insbesondere durch Lötung, durch gegebenenfalls leitfähige Verklebung und/oder durch Verstemmung.

2. Verfahren zur Produktion eines Radarsystems nach Anspruch 1, wobei beim Radarsystem die Übertragung der Radarsignale zwischen dem mindestens einen Hochfrequenzbauteil und der jeweils mindestens einen Einzelantenne auf der Oberseite der Formteile zumindest teilweise durch innenliegende Wellenleiter (7) realisiert wird, **dadurch gekennzeichnet, dass** hohlförmige Wellenleiter (7) jeweils durch eine Vertiefung in der der Platine (5) zugewandten Seite des Formteils (1, 2, 3, 4) und einer metallisierten Oberfläche der Platine (5) gebildet werden, wobei durch diesen Aufbau die Formteile (1, 2, 3, 4) jeweils aus einem einlagigen zumindest partiell metallisierten Kunststoffteil oder einem einlagigen Metallteil, welches vorzugsweise durch Druckguss, Tiefziehen oder Biegetechnik hergestellt ist, bestehen können oder bestehen.

3. Verfahren zur Produktion eines Radarsystems nach einem der obigen Ansprüche, wobei eine grobe Positionierung der Formteile (1, 2, 3, 4) zur Platine (5) durch Strukturen, insbesondere Zapfen und/oder Stifte (1.4), realisiert wird, die vom Formteil (1, 2, 3, 4) in Aussparungen oder Löcher (5.1) der Platine (5) ragen.

4. Verfahren zur Produktion eines Radarsystems nach einem der obigen Ansprüche, wobei die Schablone (6) federnde Elemente (6.1) aufweist, welche die einzelnen Formteile (1, 2, 3, 4) während einer Lötung oder Verklebung mit der Platine (5) gegen diese drücken, um insbesondere bei Unebenheiten in der Platine (5) und/oder den Formteilen (1, 2, 3, 4) eine durchgehende Löt- bzw. Klebeverbindung neben den durch Platine (5) und Formteile (1, 2, 3, 4) gebildeten Wellenleitern zu gewährleisten.

5. Verfahren zur Produktion eines Radarsystems nach Anspruch 4, wobei wenigstens ein Formteil (1, 2, 3, 4) Sollbiegestellen aufweist, insbesondere in Form von Nuten, Durchbrüchen und/oder Stegen.

6. Verfahren zur Produktion eines Radarsystems nach einem der obigen Ansprüche, wobei die Positionierung der Formteile (1, 2, 3, 4) zur Schablone (6) durch Positionierungsstrukturen, insbesondere Zapfen und/oder Stifte (6.1), realisiert wird, die von der Schablone (6) in Aussparungen oder Löcher (1.1) der Formteile (1, 2, 3, 4) ragen.

7. Verfahren zur Produktion eines Radarsystems nach Anspruch 6, bei welchem die Positionierungsstrukturen der Schablone (6) eine selbstzentrierende Eigenschaft haben, insbesondere durch konische Form und/oder federnde Eigenschaft.

8. Verfahren zur Produktion eines Radarsystems nach einem der obigen Ansprüche 4-7, wobei die Schablone (6) axial geführte federnde Stifte (6.1) aufweist, die zur Positionierung der Formteile (1, 2, 3, 4) und/oder zur Anpressung der Formteile (1, 2, 3, 4) gegen die Platine (5) dienen.

9. Verfahren zur Produktion eines Radarsystems nach einem der obigen Ansprüche, wobei die Positionierung der Schablone (6) zur Platine (5) durch Strukturen, insbesondere Zapfen und/oder Stifte (6.3), realisiert wird, die von der Schablone (6) in oder durch Aussparungen oder Löcher (5.2) der Platine (5) ragen.

10. Verfahren zur Produktion eines Radarsystems nach einem der obigen Ansprüche, wobei die Schablone (6) Strukturen mit einem beweglichen Mechanismus aufweist, welche nach Auslösen bzw. Anwenden von diesem Mechanismus die Platine (5) von hinten gegen Referenzflächen (6.5) auf der Schablone (6) drücken, um während des Verbindungsprozesses zwischen Formteilen (1, 2, 3, 4) und Platine (5) die Schablone (6) mit der Platine (5) zu fixieren und/oder die Platine (5) in eine möglichst ebene Lage zu bringen, wobei es vorzugsweise Pressstrukturen über die ganze Platine (5) verteilt gibt, also auch im mittleren Bereich, um insbesondere ein Durchbiegung der Platine (5) durch Andrücken der Formteile (1, 2, 3, 4) von oben her zu vermeiden, und diese Pressstrukturen gegebenenfalls auch als Positionierungsstrukturen wirken.

11. Verfahren zur Produktion eines Radarsystems nach einem der obigen Ansprüche, wobei eine Schablone (6) mehrere Platinen (5) abdeckt, insbesondere alle sich auf einem Panel befindenden Platinen (5).

12. Verfahren zur Produktion eines Radarsystems nach einem der obigen Ansprüche, bei welchem es mehrere Hochfrequenzbauteile gibt, die über ein gemeinsames Hochfrequenzsignal, das sogenannte LO-Signal, verbunden sind, wobei das LO-Signal zumindest teilweise in wenigstens einem hohlförmigen Wellenleiter (15) geführt wird, wozu es wenigstens ein weiteres mit der Platine (5) verbundenes Formteil (14) gibt und der hohlförmige Wellenleiter (15) durch eine Vertiefung, Ausnehmung oder Ausbuchtung in der der Platine zugewandten Seite des Formteils (14) und einer metallisierte Oberfläche (5.3) der Platine (5) gebildet wird, wobei dieses weitere wenigstens eine Formteil (14) ebenfalls von der Schablonenvorrichtung für die Produktion fixiert und/oder positioniert wird.

13. Verfahren zur Produktion eines Radarsystems nach Anspruch 12, wobei sich das wenigstens eine Formteil (14) für den hohlförmigen LO-Wellenleiter auf der anderen Platinenseite als die Formteile (1, 2, 3, 4) mit den Antennen befindet und die Schablonenvorrichtung wenigstens eine Struktur mit einem beweglichen Mechanismus aufweist, welche nach Auslösen bzw. Anwenden von diesem Mechanismus das Formteil (14) für den hohlförmigen LO-Wellenleiter oder die Formteile (1, 2, 3, 4) mit den Antennen von hinten gegen die Platine (5) drückt.
